# EUROPÄISCHE PATENTANMELDUNG

(11) **EP 3 214 516 A1**
(43) Veröffentlichungstag der Anmeldung: **06.09.2017**
(21) Anmeldenummer: 16158720.9
(22) Anmeldetag: 04.03.2016
(51) Int. Cl.: G05B 19/414

(54) **NUMERISCHE WERKZEUGMASCHINENSTEUERUNG**

(71) Anmelder: Siemens Aktiengesellschaft, 80333 München (DE)
(72) Erfinder: Ziemer, Wolfgang, 86871 Rammingen (DE)

(57) **Zusammenfassung**

Eine numerische Werkzeugmaschinensteuerung (2) umfasst einen NC-Kern (12) mit mindestens einem Bearbeitungskanal (19) zur Erzeugung von Bewegungssollwerten für jeweils zugeordnete Werkzeugmaschinenachsen (15). Ein weiterer Kanal (20) im NC-Kern (12) ist eingerichtet, zumindest einen Teil von Funktionen einer Anpasssteuerung (14) auszuführen, wobei die Anpasssteuerung (14) mit dem NC-Kern (12) funktionell verknüpft ist zur Anpassung der numerischen Werkzeugmaschinensteuerung (2) an eine konkrete Werkzeugmaschine (4).

## Beschreibung

Die vorliegende Erfindung betrifft eine numerische Werkzeugmaschinensteuerung mit einem NC-Kern, der mindestens einen Bearbeitungskanal zur Erzeugung von Bewegungssollwerten für jeweils zugeordnete Werkzeugmaschinenachsen umfasst.

Unter einer Werkzeugmaschine versteht man eine mechanisierte und mehr oder weniger automatisierte Fertigungseinrichtung, die durch relative Bewegung zwischen Werkstück und Werkzeug eine vorgegebene Form am Werkstück oder eine Veränderung einer vorgegebenen Form an einem Werkstück erzeugt.

Die Steuerung von Werkzeugmaschinen hat heutzutage einen hohen Automatisierungsgrad erreicht. Möglich sind heute Werkstückbearbeitungen mit Werkzeugwechsel, so dass eine Werkzeugmaschine von einem Rohling bis zum fertigen Werkstück komplett alle Bearbeitungsschritte nacheinander ausführen kann. Für den Bearbeitungsablauf einschließlich der Bewegungssteuerung von Werkzeug und/oder Werkstück kommen heute numerische Werkzeugmaschinensteuerungen (englisch: numerical control, NC) zur Anwendung. Sie zählen zu den Ablaufsteuerungen und geben die einzelnen Bearbeitungs- und Ablaufschritte in Form alphanumerischer Zeichen an. Heutzutage basieren die numerischen Steuerungen auf Mikroprozessor-Technologie (englisch: computerized numerical control, CNC), die flexibel programmierbar ist.

Mit modernen Werkzeugmaschinensteuerungen ist es möglich, zwei oder mehr Achsen der Werkzeugmaschine gleichzeitig anzusteuern und das Werkzeug z.B. auf einer Kreisbahn zu führen. Dazu zerlegt die Werkzeugmaschinensteuerung die Bahn in kleine Teilabschnitte und fährt der Reihe nach Punkte auf diesen Abschnitten an. Die Wege zwischen diesen Punkten werden interpoliert. Daraus werden Lagesollwerte für die Achsen der Werkzeugmaschine berechnet, die über eine Anpasssteuerung, die üblicherweise als speicherprogrammierbare Steuerung oder SPS realisiert ist, an die Werkzeugmaschine weitergegeben werden.

Der Zugang des Anwenders zu der numerischen Werkzeugmaschinensteuerung und damit auch zur Werkzeugmaschine erfolgt über eine Mensch-Maschine-Schnittstelle (englisch: human machine interface, HMI) mit einen Bildschirm (gegebenenfalls mit zusätzlichen Tasten oder als Touch-Panel) mit Menüansicht und einer Tastatur. Mit den dazugehörigen Speichermedien und Funktionen zur Programmaufbereitung bilden diese Komponenten den Kommunikationsteil der Werkzeugmaschinensteuerung.

Man kann für eine numerische Werkzeugmaschinensteuerung drei wesentliche Funktiongruppen angeben: den COM-Teil, den NC-Kern und den PLC-Teil.

Der COM-Teil dient Kommunikationsaufgaben mit der angeschlossenen Peripherie, wie beispielsweise Eingangs- und Ausgangsbaugruppen, Sensoren, Endschaltern und Ähnlichem. Ebenfalls erfüllt der COM-Teil die Kommunikationsaufgaben mit dem Bediener in der Mensch-Maschine-Schnittstelle und für den Programmierer in einer Programmierumgebung, welche mindestens einen Programmeditor, oft aber auch Simulations- und Testeinrichtungen umfasst.

Der NC-Kern beinhaltet die Hauptfunktionalität einer Werkzeugmaschinensteuerung, also die Wegesteuerung und Interpolation und damit die Erzeugung von Bewegungssollwerten für die Achsen der Werkzeugmaschine. Das Nachführen dieser Bewegungen erfolgt im Allgemeinen durch eine Lageregelung an den Achsen.

Zur Anpassung der numerischen Steuerung an konkrete Werkzeugmaschinentypen dient der PLC-Teil (PLC = programmable logic controller), auch Anpasssteuerung genannt. Hier sind maschinenbezogene Verbindungen auf der Grundlage boolescher Variablen und Grundfunktionen realisiert. Der PLC-Teil ist mit Aktoren und Sensoren in der Werkzeugmaschine verbunden. Über die Anpasssteuerung werden Aktoren in der Werkzeugmaschine angesteuert und Signale oder Zustände von Sensoren in der Werkzeugmaschine erfasst und ggf. auch verarbeitet. So wird beispielsweise eine Anbindung eines Werkzeugwechslers oder die Erstellung von Sicherheitsfunktionen über den PLC-Teil erfolgen. Strukturell entspricht die Anpasssteuerung einer speicherprogrammierbaren Steuerung (SPS).

Sowohl im NC-Kern wie im PLC-Teil werden die Steuerungsfunktionen über Programme realisiert, die von einer oder auch mehreren Recheneinheiten abgearbeitet werden. In der Programmausführung besteht jedoch ein wesentlicher Unterschied zwischen dem PLC-Teil und dem NC-Teil. So wird in dem PLC-Teil das Programm sequenziell abgearbeitet, ähnlich dem Programmablauf bei speicherprogrammierten Steuerungen (SPS). Dagegen erfolgt im NC-Kern die Abarbeitung eines Programms Schritt für Schritt oder Satz für Satz, d.h. ein nachfolgender Programmschritt wird erst dann bearbeitet, wenn der vorangehende Programmschritt das gewünschte Ergebnis erbracht hat.

Es gibt eine ständige Interaktion zwischen den Achsbewegungen der Werkzeugmaschine, die vom NC-Programm vorgegeben werden, und der Ansteuerung von Aktoren in der Werkzeugmaschine, die von der Anpasssteuerung aus erfolgen. Dabei hat der NC-Kern der Werkzeugmaschinensteuerung im Allgemeinen mehrere Kanäle, in denen abhängig oder unabhängig voneinander synchrone oder asynchrone NC-Programme ablaufen können. Zusätzlich gibt es Interaktionen zwischen dem PLC-Teil und dem NC-Kern, wenn von dem PLC-Teil gesteuerte Bewegungen teilweise von Signalen von Sensoren und teilweise auch vom NC-Kern ausgelöst werden. Bei den Werkzeugmaschinensteuerungen besteht somit die Problematik einer Koordination zwischen Abläufen, die vom NC-Kern und die von der Anpasssteuerung gesteuert werden.

Bei heutigen Werkzeugmaschinen ist die Anzahl von konventionellen Aktoren, wie Ventile, Drehstrommotoren usw., 5- bis 10-mal so groß wie die Anzahl der Achsen der Werkzeugmaschine. Die Koordination zwischen dem NC-Kern und dem PLC-Teil wird im NC-Programm der Werkzeugmaschine über M-Funktionen durchgeführt, die als Programmschritte für den NC-Kern zur Verfügung stehen. Beispielsweise steuert eine bestimmte M-Funktion aus dem Werkzeugmaschinenprogramm einen Aktor an. Eine weitere M-Funktion, meist ein paar Sätze weiter, fragt ab, ob der Aktor das vorgegebene Ziel oder den vorgegebenen Zustand erreicht hat. Ist der Aktor am vorgegebenen Ziel oder im vorgegebenen Zustand, führt das zu einer Fortsetzung des NC-Programms. Andernfalls wartet das NC-Programm, bis das gewünschte Ziel oder der gewünschte Zustand erreicht ist. Alternativ werden zur Ansteuerung der Aktoren auch Positionsbereiche von ein oder mehreren Achsen der Werkzeugmaschine definiert, die in einem Schrittkettenablauf zur Weiterschaltung verwendet werden.

Die Aufgabe der vorliegenden Erfindung besteht darin, eine Werkzeugmaschinensteuerung anzugeben, bei der die Kommunikation mit einer zugehörigen Werkzeugmaschine vereinfacht ist und die schneller als bei einer herkömmlichen Werkzeugmaschinensteuerung ablaufen kann.

Die Aufgabe wird durch eine Werkzeugmaschinensteuerung mit den Merkmalen des Patentanspruchs 1 gelöst. Dabei ist in der Werkzeugmaschinensteuerung der eingangs genannten Art erfindungsgemäß ein weiterer Kanal im NC-Kern eingerichtet, zumindest einen Teil von Funktionen einer Anpasssteuerung auszuführen, wobei die Anpasssteuerung mit dem NC-Kern funktionell verknüpft ist zur Anpassung der numerischen Werkzeugmaschinensteuerung an eine konkrete Werkzeugmaschine. Da der Takt im NC-Kern deutlich kürzer ist als der Takt in einem herkömmlichen PLC-Teil, ergibt sich beispielsweise bei der Abarbeitung einer M-Funktion schon allein bei der Kommunikation des NC-Teils mit der Anpasssteuerung eine deutliche Verkürzung der Kommunikationszeiten. Es ist so im Vergleich zum Stand der Technik eine schnellere Kommunikation zwischen der Anpasssteuerung und den vom NC-Kern vorgegebenen Bewegungsfolgen möglich. Da Programme in NC-Teil vom Anwender änderbar sind, ist es auch von Vorteil, dass der Zugriff auf Funktionen der Anpasssteuerung durch einen Anwender ohne Engineering-Werkzeuge, wie beispielsweise ein Programmiergerät, möglich ist. Es ist kein Inbetriebnehmer für die Werkzeugmaschine erforderlich, um Ablaufänderungen in der Anpasssteuerung vorzunehmen. Eine Ablaufdiagnose ist ebenfalls vereinfacht, da das in dem weiteren Kanal ablaufende Programm genauso wie normale NC-Programme an der Mensch-Maschine-Schnittstelle in ihrem Ablauf dargestellt werden und den jeweiligen Status zu den Befehlen angeben.

Eine besonders vorteilhafte Ausgestaltung der Erfindung ist durch die Merkmale des Anspruchs 5 angegeben. Danach umfasst der weitere Kanal im NC-Kern logische Verknüpfungen, die einen Zugriff auf Variable in dem NC-Kern und in der Anpasssteuerung erlauben. Damit ist eine einfache Möglichkeit gegeben, bei einer satzweisen Abarbeitung der Befehle in dem weiteren Kanal Mehrfachzustände von Aktoren oder Sensoren in der Werkzeugmaschine miteinander und auch mit Vorgaben des NC-Kerns zu verknüpfen.

Eine weitere vorteilhafte Ausgestaltung ist durch die Merkmale des Anspruchs 6 gegeben. Danach ist der weitere Kanal im NC-Kern mit zumindest einem der Kanäle zur Erzeugung von Bewegungssollwerten synchronisierbar. Damit können mehrere unabhängig sequenzielle Abläufe parallel stattfinden und sich an den Synchronisationspunkten wieder vereinen.

Die vorstehend beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung eines Ausführungsbeispiels, das in Verbindung mit den Zeichnungen näher erläutert werden. Hierbei zeigen in schematischer Darstellung:
- FIG 1: in einem Blockbild den Aufbau einer Werkzeugmaschinensteuerung mit verbesserter Kommunikation zwischen dem NC-Kern und der Anpassungssteuerung und
- FIG 2: ein Ausschnitt eines Programms für eine Anpasssteuerung, die in einem Kanal des NC-Kerns abläuft.

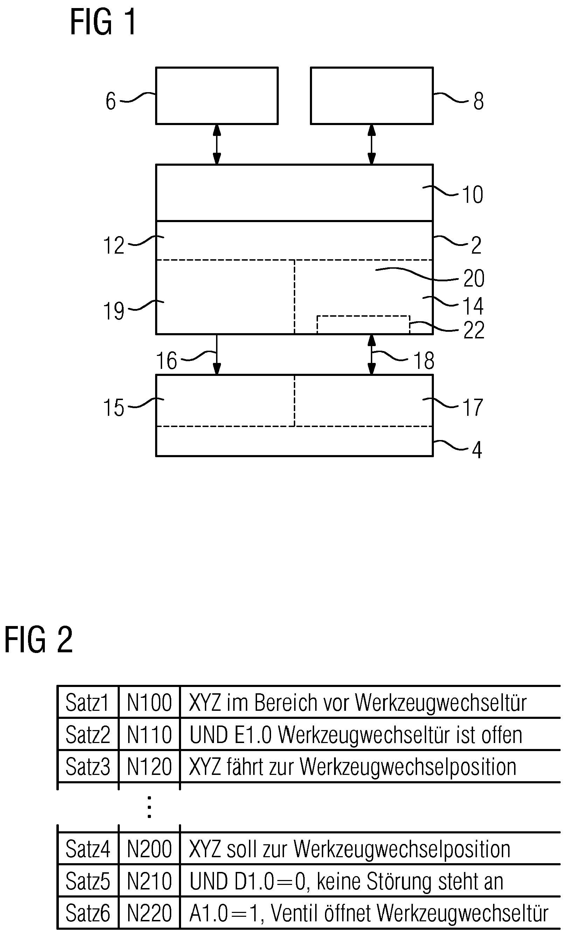

Das Blockbild in FIG 1 zeigt eine numerische Werkzeugmaschinensteuerung 2, die mit einer Werkzeugmaschine 4 zur Bearbeitung eines Werkstücks zusammenwirkt. Der Zugang eines Anwenders oder Bedieners zu der Werkzeugmaschinensteuerungen 2 erfolgt über eine Ein-/Ausgabeeinheit 6, die auch als NC-Bedientafel bezeichnet wird. Zusätzlich ist noch eine Kommunikationsschnittstelle 8 vorgesehen, die eine Einbettung der numerisch gesteuerten Werkzeugmaschine 4 in ein Computernetzwerk ermöglicht, diese Betriebsart wird im Englischen als Distributed Numerical Control (DNC) bezeichnet.

Die Werkzeugmaschinensteuerung 2 ist unterteilt in drei Hauptfunktionsbereiche. Ein erster Hauptfunktionsbereich, der COM-Teil 10, erfüllt Kommunikationsaufgaben mit einer angeschlossenen Peripherie, wie zum Beispiel Eingangs- und Ausgangsbaugruppen, Sensoren, Endschaltern und Ähnlichem. Des Weiteren dient der COM-Teil 10 der Kommunikation mit der Ein-/Ausgabeeinheit 6. Er stellt zudem eine Programmierungsumgebung zur Verfügung, welche mindestens einen Programmeditor, oft aber auch Simulations- und Testeinrichtungen umfasst.

Die Hauptfunktionalität der Werkzeugmaschinensteuerungen 2, also eine Wegesteuerung und Interpolation und damit die Erzeugung von Bewegungssollwerten für die Werkzeugmaschine 4, ist in einem NC-Kern 12 realisiert.

Schließlich dient die dritte Hauptfunktionalität der Werkzeugmaschinensteuerung 4 einer Anpasssteuerung 14, die der Anpassung der allgemeinen, auf das Werkstück bezogenen Bewegungssteuerung aus dem NC-Kern 12 an die konkrete Werkzeugmaschine 4 dient. Dazu gehören das Ansteuern von Aktoren, das Erfassen von Sensorsignalen, das Realisieren von Überwachungsfunktionen, das Gewährleisten von Sicherheitsfunktionen usw. In bisher bekannten Werkzeugmaschinensteuerungen wird die Anpasssteuerung 14 mittels einer PLC (programmable logic controller), also mit einer speicherprogrammierbaren Steuerung ausgeführt. Wie weiter unten noch ausführlich beschrieben ist, ist im vorliegenden Ausführungsbeispiel bei gleicher Funktionalität wie im Stand der Technik eine andere Realisierung der Anpasssteuerung 14 vorgesehen.

Die daten- oder signaltechnische Verbindung der Werkzeugmaschinensteuerung 2 mit der Werkzeugmaschine 4 erfolgt bezüglich der Bewegungssollwerte für die Achsen 15 der Werkzeugmaschine 4 über erste Steuerleitungen 16 und bezüglich der Aktoren und Sensoren in der Werkzeugmaschine 4 mittels zweiter Steuerleitungen 18 über binäre Ein-/Ausgänge 17.

Bei der Wegesteuerung des Werkzeugs und/oder des Werkstücks in der Werkzeugmaschine 4 werden die Bewegungsrichtungen der bewegten Komponenten auch als Werkzeugmaschinenachsen bezeichnet. Über die Werkzeugmaschinenachsen kann eine Kennzeichnung der Bewegung von Maschinenbauelementen im Raum bzw. in der Werkzeugmaschine erfolgen. Dies geschieht über die Beschreibung von Wegpositionen der Komponenten in einem festzulegenden Koordinatensystem. Moderne Werkzeugmaschinensteuerungen verwalten und regeln bei Bedarf über 30 Achsen. Diese können dabei in mehrere virtuelle und voneinander unabhängige Maschinenteile aufgeteilt werden. Des Weiteren können Maschinenachsen in einen oder mehrere Bearbeitungskanäle 19 gruppiert werden. Jeder Bearbeitungskanal 19 im NC-Kern 12 arbeitet wie eine eigene Werkzeugmaschinensteuerung sein Programm ab. Somit kann eine mehrkanalfähige Werkzeugmaschinensteuerung 2 gleichzeitig und unabhängig voneinander mehrere NC-Programme abarbeiten.

Diese Eigenschaft der Unabhängigkeit der einzelnen Kanäle im NC-Kern 12 wird genutzt, um zumindest einen Teil der Funktionalität in der Anpasssteuerung 14 in einem weiteren Kanal 20 des NC-Kerns 12 zu realisieren. Im vorliegenden Ausführungsbeispiel wird die gesamte Anpasssteuerung 14 in dem mindestens einen weiteren Kanal 20 des NC-Kerns 12 realisiert. Die Anpasssteuerung 14 arbeitet vorliegend somit nicht mehr nach Art einer speicherprogrammierbaren Steuerung. Zwischen dem weiteren Kanal 20 und den binären Ein-/Ausgängen 17 der Aktoren und Sensoren der Werkzeugmaschine 4 ist ein Interface 22 angeordnet, über das eine signalmäßige Anpassung der Signale von und zu dem weiteren Kanal 20 der Anpasssteuerung 14 und den binären Ein-/Ausgängen 17 der Werkzeugmaschine 4 erfolgt.

Der weitere Kanal 20 im NC Kern 12 ist entsprechend wie bei den übrigen Kanälen im NC-Kern 12 zur sequenzielle Abarbeitung von aufeinanderfolgenden Sätzen oder Befehlen eines Steuerprogramms ausgebildet. Das bedeutet zunächst, dass mit der Bearbeitung eines nachfolgenden Satzes oder Befehls erst dann begonnen wird, wenn der vorangehende Satz oder Befehl vollständig abgearbeitet ist. Die Abarbeitung der einzelnen Sätze oder Befehle erfolgt in der im Programm vorgegebenen Reihenfolge und beginnt nach der Abarbeitung des letzten Satzes wieder beim ersten Satz des Programms. Das Programm wird also wiederholt zyklisch abgearbeitet, wobei innerhalb der Zykluszeit des Programms alle für die Bearbeitung des Werkstücks erforderlichen Zustände der Werkzeugmaschine 4 abgefragt werden. Zusammen mit gegebenenfalls weiteren Bedingungen verknüpft und entsprechend der Vorgabe des NC-Programms wird so der Ablauf der Bearbeitungsschritte gesteuert.

Zur Programmierung der Funktionalität der Anpasssteuerung in dem weiteren Kanal 20 im NC-Kern 12 müssen für die benötigten Steuerbefehle der Aktoren und der Abfragebefehle für die Sensoren entsprechende Funktionen sowie auch logische Verknüpfungsmöglichkeiten vorhanden sein. Die Syntax zur Programmierung eines weiteren Kanals besteht somit aus einer Kombination von Befehlen in der Art von üblichen Befehlen im NC-Kern 12, üblichen Befehlen aus dem herkömmlichen PLC-Teil und neu zu definierenden Logikelementen, die die Editierbarkeit des Programms zur Anpasssteuerung und die Statusanzeigefähigkeit vereinfachen.

Am Beispiel eines vom NC-Programm vorgegebenen Werkzeugwechsels zu einem bestimmten Bearbeitungsschritt analog zur Funktion M321 soll die Arbeitsweise der Anpasssteuerung 14 bei der Realisierung in dem weiteren Kanal 20 verdeutlicht werden. Dabei bezeichnet:
E1.0 einen Endschalter, der angibt, dass die Werkzeugwechseltür geöffnet ist,
A1.0 ein Ventil zum Öffnen der Werkzeugwechseltür,
D1.0 ein Störungszustand im Werkzeugwechsler Der Störzustand D1.0 ist eine unabhängige separate Verknüpfung, z.B. aus der Überschreitung einer vorgegebenen Zeit für das Öffnen oder Schließen der Werkzeugwechseltür oder einer Überschneidung der Sensorsignale "Werkzeugwechseltür geöffnet" mit "Werkzeugwechseltür geschlossen".

In FIG 2 sind nun beispielhaft sechs Sätze eines Programms Anpasssteuerung 14 angegeben, die bei einer satzweisen Abarbeitung bewirken, dass das Ventil A1.0 zum Öffnen der Werkzeugwechseltür aktiviert wird. Jeder Satz ist analog wie bei herkömmlichen NC-Programmen eindeutig mit einer Buchstaben-Ziffern-Kombination bezeichnet.

Der erste Satz N100 fragt ab, ob sich der Werkzeughalter mit dem zu wechselnden Werkzeug in einem Bereich oder in der Zielposition XYZ vor der Werkzeugwechseltür befindet. Das Ergebnis dieses Programmsatzes kann sein, das zu wechselnde Werkzeug befindet sich in diesem Bereich oder es befindet sich nicht in diesem Bereich. Liegt das Ergebnis vor, wird der zweite Satz N110 abgearbeitet.

Der zweite Satz N110 verknüpft das Ergebnis des ersten Satzes N100 und das Ergebnis der Abfrage des Endschalters E1.0, ob die Werkzeugwechseltür geöffnet ist, mit einem logischen UND. Ist das Ergebnis des ersten Satzes N100 UND des zweiten Satzes N110 positiv, fährt der Werkzeughalter XYZ gemäß dem dritten Satz N120 zur Werkzeugwechselposition. Ist eines Ergebnisse des ersten oder zweiten Satzes N100 bzw. N110 negativ, fährt der Werkzeughalter XYZ nicht zur Werkzeugwechselposition, sondern bleibt stehen.

Diese vorstehenden drei Sätze sind nur ein kleiner Auszug. Aber es ist ersichtlich, dass auch hier die Befehle immer wieder zyklisch durchlaufen werden, ohne etwas auszulösen, da die erforderlichen Bedingungen dazu nicht erfüllt sind.

Im vierten Satz N200 wird vorgegeben, dass der Werkzeughalter XYZ zur Werkzeugwechselposition verfahren werden soll. Im fünften Satz N210 wird abgefragt, ob im Werkzeugwechsler eine Störung D1.0 ansteht. Die Ergebnisse der beiden Sätze N200 und N210 werden logisch UND-verknüpft, so dass im sechsten Satz N220 das Ventil zur Öffnen der Werkzeugwechseltür A1.0 aktiviert wird, wenn der Werkzeughalter XYZ zur Werkzeugwechselposition soll UND wenn keine Störung ansteht. Falls einer der beiden Sätze N200 und N210 ein negatives Ergebnis bringt (XYZ soll nicht zur Werkzeugwechselposition oder es liegt eine Störung vor), bleibt das Ventil A1.0 geschlossen.

Diese beispielhaft angegebenen sechs Sätze werden zusammen mit den übrigen Sätzen im Programm der Anpasssteuerung fortlaufend zyklisch immer von Anfang bis Ende abgearbeitet.

Von besonderem Vorteil ist bei der vorstehend beschriebenen Realisierung der Anpasssteuerung 14, dass im Programm der Anpasssteuerung 14 nur die Programmsätze enthalten sein müssen, die für die Fertigung eines bestimmten Werkstücks benötigt werden. Beispielsweise können die Programmsätze für einen Werkzeugwechsel entfallen, wenn überhaupt kein Werkzeugwechsel im Bearbeitungsablauf vorgesehen ist.

Es soll hervorgehoben werden, dass somit nicht wie bei einer herkömmlichen Anpasssteuerung in einem Zyklus immer alle

Aktoren angesprochen und alle Sensoren abgefragt werden, selbst wenn sie für eine spezielle Teilefertigung nicht benötigt werden. Somit können abhängig von der Komplexität der Fertigungsschritte sehr kurze Zykluszeiten realisiert werden. Beispielsweise arbeitet heutzutage eine herkömmliche Anpasssteuerung, die als SPS organisiert ist, mit einer Zykluszeit von 50 ms bis 100 ms. Dagegen kann eine Anpasssteuerung 14, die in einem weiteren Kanal 20 des NC-Kerns 12 abläuft, mit einer Zykluszeit von 1 ms bis 4 ms ablaufen.

Ein weiterer Vorteil der Realisierung der Anpasssteuerung 14 in dem weiteren Kanal 20 des NC-Kerns 12 besteht darin, dass von der Anpasssteuerung 14 mehrere Aktionen parallel und überwacht abgearbeitet werden können. Zudem können Synchronisierungsmöglichkeiten des NC-Kerns 12 zwischen den Kanälen ausgenutzt werden.

Dann ist es möglich, dass die Anpasssteuerung 14 ohne Programmiergerät von einem NC-Programmierer an der Ein-/Ausgabeeinheit 6 oder auch an anderer Stelle editiert werden kann.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Numerische Werkzeugmaschinensteuerung (2) mit einem NC-Kern (12), der mindestens einen Bearbeitungskanal (19) zur Erzeugung von Bewegungssollwerten für jeweils zugeordnete Werkzeugmaschinenachsen (15) umfasst,
**dadurch gekennzeichnet, dass** ein weiterer Kanal (20) im NC-Kern (12) eingerichtet ist, zumindest einen Teil von Funktionen einer Anpasssteuerung (14) auszuführen, wobei die Anpasssteuerung (14) mit dem NC-Kern (12) funktionell verknüpft ist zur Anpassung der numerischen Werkzeugmaschinensteuerung (2) an eine konkrete Werkzeugmaschine (4).

2. Numerische Werkzeugmaschinensteuerung nach Anspruch 1,
**dadurch gekennzeichnet, dass** der weitere Kanal (20) im NC-Kern (12) zur sequentiellen Abarbeitung von aufeinanderfolgenden Sätzen oder Befehlen eines Steuerprogramms ausgebildet ist, um zumindest den Teil der Funktionen der Anpasssteuerung (14) auszuführen.

3. Numerische Werkzeugmaschinensteuerung nach Anspruch 2,
**dadurch gekennzeichnet, dass** der weitere Kanal (20) im NC-Kern (12) ausgebildet ist, einen in dem Steuerprogramm folgenden Satz oder Befehl erst dann abzuarbeiten, wenn der voranstehende Satz oder Befehl abgearbeitet ist.

4. Numerische Werkzeugmaschinensteuerung nach Anspruch 3,
**dadurch gekennzeichnet, dass** der weitere Kanal (20) im NC-Kern (12) dazu ausgebildet ist, alle Sätze oder Befehle wiederholt zyklisch abzuarbeiten.

5. Numerische Werkzeugmaschinensteuerung nach einem der vorstehenden Ansprüche,
**dadurch gekennzeichnet, dass** der weitere Kanal (20) im NC-Kern (12) logische Verknüpfungen umfasst, die einen Zugriff auf Variable in dem NC-Kern (12) und in der Anpasssteuerung (14) erlauben.

6. Numerische Werkzeugmaschinensteuerung nach einem der vorstehenden Ansprüche,
**dadurch gekennzeichnet, dass** der weitere Kanal (20) im NC-Kern (12) mit zumindest einem der Kanäle zur Erzeugung von Bewegungssollwerten (19) synchronisierbar ist.
